Europäisches Patentamt

European Patent Office

Office européen des brevets

(19)

(11) **EP 0 590 395 B1**

(12) **EUROPÄISCHE PATENTSCHRIFT**

(45) Veröffentlichungstag und Bekanntmachung des Hinweises auf die Patenterteilung:
**10.09.1997 Patentblatt 1997/37**

(51) Int. Cl.$^6$: **B01J 20/24**, C08B 37/00

(21) Anmeldenummer: **93114637.7**

(22) Anmeldetag: **11.09.1993**

(54) **Absorptionsmittel für Wasser und wässrige Lösungen**

Absorption agent for water and aqueous solutions

Agent absorbent pour l'eau et solutions aqueuses

(84) Benannte Vertragsstaaten:
**BE DE ES FR GB NL SE**

(30) Priorität: **01.10.1992 DE 4233042**

(43) Veröffentlichungstag der Anmeldung:
**06.04.1994 Patentblatt 1994/14**

(73) Patentinhaber:
**HOECHST AKTIENGESELLSCHAFT**
**65926 Frankfurt am Main (DE)**

(72) Erfinder:
• **Engelhardt, Friedrich, Dr.**
  **D-60386 Frankfurt am Main (DE)**
• **Ebert, Gerlinde, Dr.**
  **D-63303 Dreieich/Offenthal (DE)**
• **Riegel, Ulrich**
  **D-60386 Frankfurt am Main (DE)**
• **Greve, Rainer, Dr.**
  **D-23795 Bad Segeberg (DE)**

(56) Entgegenhaltungen:
**EP-A- 0 273 069**

• **DATABASE WPI Week 8520, Derwent**
  **Publications Ltd., London, GB; AN 85-118772 &**
  **JP-A-60 058 443 (KOHJIN)**
• **DATABASE WPI Week 8625, Derwent**
  **Publications Ltd., London, GB; AN 86-160317 &**
  **JP-A-61 094 655 (MIYATA N)**
• **DATABASE WPI Week 8625, Derwent**
  **Publications Ltd., London, GB; AN 86-160409 &**
  **JP-A-61 095 014 (MIYATA N)**
• **DATABASE WPI Week 9127, Derwent**
  **Publications Ltd., London, GB; AN 91-197979 &**
  **JP-A-3 123 620 (KATO H)**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Absorptionsmittel für Wasser und wäßrige Lösungen, das Naturprodukte aus den Knollen von Pflanzen der Familie Araceae enthält.

Für die Herstellung von Windeln, Damenbinden, Tampons und anderen Hygieneartikeln werden quellbare Polymere verwendet, die wäßrige Lösungen absorbieren. Zu den bekannten Polymeren dieses Typs gehören vernetzte Carboxymethylcellulose, teilweise vernetztes Polyalkylenoxid, Hydrolysate von Stärke-Acrylnitril-Pfropfcopolymeren und teilweise vernetzte Polyacrylsäuresalze.

Es besteht allerdings weiterhin Bedarf an neuen quellbaren Substanzen, insbesondere solchen, die sich durch spontanes Absorptions- und hohes Retentionsvermögen gegenüber Blut und anderen serösen Körperflüssigkeiten sowie durch eine hohe Aufnahmekapazität wäßriger Lösungen höherer Elektrolytkonzentrationen auszeichnen.

Es ist bereits bekannt, daß aus Knollen von Spezies der Familie der Araceae Produkte gewonnen werden können, die den Polysacchariden zuzuordnen sind. Besonders gilt dies für Spezies der Gattung Amorphophallus. Beispielsweise kann aus den Knollen der vor allem in Japan und Indonesien verbreiteten Art Amorphophallus Konjak, das sogenannte Konjakmehl und aus diesem sogenanntes Konjakumannan erhalten werden (US 3,928,322). Bei Konjakumannan handelt es sich um ein Glucomannan, das in Japan seit Jahrhunderten als Lebensmittel bekannt ist. Glucomannane sind gelierfähige Produkte, die besonders in der Lebensmittelindustrie, aber auch in der Pharmazie und auf anderen Feldern Anwendung finden.

Es ist nun überraschenderweise festgestellt worden, daß sich die genannten Produkte in Mischung mit einem oder mehreren hochsaugfähigen, wasserquellbaren synthetischen Polymeren als weiterer saugfähigen Bestandteil in hervorragender Weise als Absorptionsmittel für Wasser und wäßrige Lösungen, insbesondere für Blut, eignen.

Hochsaugfähige, wasserquellbare synthetische Polymere sind unter der Bezeichnung "Superabsorbent Polymer" (SAP) bekannt. Es handelt sich dabei insbesondere um Polymere auf Basis (co)polymerisierter hydrophiler Monomerer.

Die vorliegende Erfindung betrifft somit ein Absorptionsmittel für Wasser und wäßrige Flüssigkeiten, dadurch gekennzeichnet, daß es ein Polysaccharid aus der Knolle einer Pflanze aus der Familie der Araceae und als weiteren saugfähigen Bestandteil ein oder mehrere hochsaugfähige, wasserquellbare synthetische Polymere enthält.

Geeignete Pflanzen aus der Familie der Araceae sind beispielsweise der chinesische Taro (Colocasia esculenta var. antiquorum) und insbesondere Arten aus der Gattung Amorphophallus, wie A. rivieri, A. albus, A. bulbifer, A. campanulatus, A. giganteus, A. variabilis, A. titanum, A. konjak und A. virosus.

Besonders bevorzugt sind Produkte aus Amorphophallus konjak, insbesondere Konjakmehl und Konjakumannan.

Die anspruchsgemäßen Produkte können aus den Pflanzenknollen in an sich bekannter Weise erhalten werden (siehe z.B. Ullmanns Encyklopädie der technischen Chemie, 3. Auflage, Band 13, Seite 191 (1962), sind zum Teil aber auch im Handel erhältlich.

Als copolymerisierbare hydrophile Monomere kommen insbesondere Acrylsäure, Methacrylsäure, Crotonsäure, 2-Acrylamido-2-methylpropansulfonsäure und -phosphonsäure, Vinylphosphonsäure, Vinylphosphonsäurehalbester, deren Salze, Acrylamid, N-Vinylamide oder Gemische davon in Frage.

Polymere der genannten Art sind beispielsweise in EP-A 316 792, EP-A 343 427, EP-A 391 108, EP-A 400 283, EP-A 417 410, EP-A 421 264 und EP-A 481 370 beschrieben.

Bevorzugt werden in den erfindungsgemäßen Absorptionsmitteln hochsaugfähige, wasserquellbare synthetische Polymere auf Basis (co)polymerisierter Acrylsäure und/oder deren Salze und/oder Acrylsäureamid eingesetzt.

Es ist bevorzugt, wenn die hochsaugfähigen, wasserquellbaren synthetischen Polymere definierte Korngrößen aufweisen. Geeignete Korngrößen liegen zwischen 0,1 und 1 mm, wobei der Bereich 0,1 bis 0,85 mm bevorzugt und der Bereich 0,3 bis 0,4 mm besonders bevorzugt ist.

Die Gewichtsverhältnisse zwischen den genannten Naturprodukten und den hochsaugfähigen, wasserquellbaren synthetischen Polymeren können in weiten Grenzen schwanken. Der Anteil an Polymer kann zwischen 1 und 99 Gew.-% schwanken.

Bevorzugte Mischungen enthalten 1 bis 20 Gew.% Naturprodukt und 80 bis 99 Gew.% Polymer.

Gegebenenfalls können die erfindungsgemäßen Absorptionsmittel auch noch Hilfs- und Zusatzstoffe enthalten. Solche Hilfs- und Zusatzstoffe sind beispielsweise Bindemittel, wobei insbesondere Polyglykol in Frage kommt. Die erfindunsgemäßen Absorptionsmittel enthalten Bindemittel in Mengen von bevorzugt 0 bis 30 Gew.%, besonders bevorzugt in Mengen von 0 bis 5 Gew.%.

Die erfindungsgemäßen Absorptionsmittel absorbieren Wasser und wäßrige Lösungen in hervorragender Weise und können somit bei der Herstellung von Hygieneartikeln wie Windeln, Binden, Tampons und anderen saugfähigen Produkten Verwendung finden. Von besonderem Vorteil ist dabei das spontane Absorptionsvermögen für Blut und andere seröse Körperflüssigkeiten, sowie das Retentionsvermögen.

Beispiele

Beispiel 1

a) Herstellung eines synthetischen, saugfähigen Polymers

Unter adiabatischen Bedingungen werden in einem 5 l zylindrischen Weithalsreaktionskolben 3650 g E-Wasser vorgelegt, 500 g einer frisch aufgekochten Stärkelösung aus 50 g Maisstärke und 450 g E-Wasser, 15 g eines ebenfalls als Pfropfgrundlage dienenden Umsetzungsproduktes aus 1,98 Mol Maleinsäureanhydrid und 1,0 Mol Polyglykol 300, 1250 g Acrylsäure sowie 0,625 g Tetraallyloxyethan darin gelöst und auf 20°C eingestellt. Es wird Stickstoff in die Monomerlösung eingeleitet (ca. 2 l/Min.), um den Sauerstoffgehalt zu erniedrigen. Bei einem Gehalt von ca. 0,8 ppm $O_2$ werden 34 g einer 4%igen wässrigen Lösung von 2,2'- Azobis-(Amidinopropan)dihydrochlorid zugegeben, nach weiterem $N_2$-Einleiten und einem $O_2$-Gehalt von ca. 0,08 ppm werden 17 g einer 0,75%igen $H_2O_2$-Lösung zugegeben und schließlich bei einem $O_2$-Gehalt von ca. 0,01 ppm werden 4,5 g einer 0,15%igen Ascorbinsäurelösung zugegeben. Durch einsetzende Polymerisation, in deren Verlauf die Temperatur bis auf ca. 90°C ansteigt, entsteht ein festes Gel, das anschließend mechanisch zerkleinert wird. 1000 g des zerkleinerten Gels werden mit 346 g Natronlauge 27%ig versetzt (Neutralisationsgrad der Acrylsäure = 70 Mol-%), 3x durchgeknetet, und anschließend bei Temperaturen über 100°C in dünner Schicht getrocknet, gemahlen und gegebenenfalls gesiebt.

b) Herstellung eines erfindungsgemäßen Absorptionsmittels

1000 g des neutralisierten Gels gemäß Beispiel 1 werden mit 20 g käuflichem Pulver "Amorphophallus Konjak Radix" in einem Kneter versetzt, bis zur völligen Homogenität verknetet und anschließend in dünner Schicht im Vakuum bei 80°C getrocknet, gemahlen und gegebenenfalls gesiebt.

Beispiel 2

In einem PETERSON & KELLY - Mischer von 10 l Inhalt werden 2,5 kg abgesiebtes Polymerpulver mit einer Korngröße von 0,1-0,85 mm, hergestellt gemäß Beispiel 1a, vorgelegt. Im Verlauf von 5 Minuten werden 76,5 g als Bindemittel wirkendes Polyethylenglykol 300 aufgedüst und 1 Minute nachgemischt. Nach Zugabe von 2,5 kg käuflichem Pulver "Amorphophallus Konjak Radix" wird bis zur völligen Homogenität gemischt.

Beispiel 3

In einer 500 ml Schraubdeckelflasche werden 50g abgesiebtes Polymerpulver mit einer Korngröße von 0,1-0,85 mm, hergestellt gemäß Beispiel 1a, und 1,8 g käuflichem Pulver "Amorphophallus Konjak Radix" auf einem Walzenstuhl bis zur völligen Homogenität vermischt.

Wie in den Beispielen 1b, 2 und 3 beschrieben, können auch die erfindungsgemäßen Absorptionsmittel der folgenden Beispiele hergestellt werden:

Beispiel 4

Absorptionsmittel aus 20 Gew.-% käuflichem Pulver "Amorphophallus Konjak Radix" und 80 Gew.-% des Polymers gemäß Beispiel 1a mit einer Korngröße von 0,1 bis 0,85 mm.

Beispiel 5 (Vergleichsbeispiel)

Absorptionsmittel aus 98,5 Gew.-% käuflichem Pulver "Amorphophallus Konjak Radix" und 1,5 Gew.-% Polyglykol 300.

Beispiel 6

Absorptionsmittel aus 3,5 Gew.-% käuflichem Pulver "Amorphophallus Konjak Radix" und 96,5 Gew.-5 des Polymers gemäß Beispiel 1a mit einer Korngröße von 0,1 bis 0,4 mm.

Beispiel 7

Absorptionsmittel aus 1 Gew.-% käuflichem Pulver "Amorphophallus Konjak Radix" und 99 Gew.-% des Polymers gemäß Beispiel 1a mit einer Korngröße von 0,1 bis 0,4 mm.

Beispiel 8

Absorptionsmittel aus 10 Gew.-% käuflichem Pulver "Amorphophallus Konjak Radix", 88,5 Gew.-% des Polymers gemäß Beispiel 1a mit einer Korngröße von 0,1 bis 0,4 mm und 1,5 Gew.-% Polyglykol 300.

Beispiel 9

Absorptionsmittel aus 20 Gew.% käuflichem Pulver "Amorphophallus Konjak Radix", 78,5 Gew.% des Polymers gemäß Beispiel 1a mit einer Korngröße von 0,1 - 0,4 mm und 1,5 Gew.% Polyglykol 300.

Beispiel 10

Absorptionsmittel aus 90 Gew.% käuflichem Pulver "Amorphophallus Konjak Radix", 8,5 Gew.% des Polymers gemäß Beispiel 1a mit einer Korngröße von 0,1 - 0,4 mm und 1,5 Gew.% Polyglykol 300.

Beispiel 11

Absorptionsmittel aus 1,5 Gew.% käuflichem Pulver "Amorphallus Konjak Radix" und 98,9 Gew.% des Polymers gemäß Beispiel 1 der Offenlegungsschrift DE 37 38 602 mit einer Korngröße von 0,1 - 0,85 mm.

Beispiel 12

Absorptionsmittel aus 5 Gew.% käuflichem Pulver "Amorphophallus Konjak Radix", 93,5 Gew.% des Polymers gemäß Beispiel 1 der Offenlegungsschrift DE 3738602 mit einer Korngröße von 0,1 - 0,4 mm und 1,5 Gew.% Polyglycol 300.

Beispiel 13

Absorptionsmittel aus 5 Gew.% käuflichem Pulver "Amorphophallus Konjak Radix" und 1,5 Gew.% handelsübliche Stärke und 93,5 Gew.% des Polymers gemäß Beispiel 1a mit einer Korngröße von 0,1 - 0,4 mm.

Beispiel 14

Absorptionsmittel aus 1,5 Gew.% käuflichem Pulver "Amorphophallus Konjak Radix" und 98,5 Gew.% eines Pfropf-Copolymers auf Basis Acrylsäure mit Neutralisationsgrad von 75 mol%.

Beispiel 15

Absorptionsmittel aus 3 Gew.% käuflichem Pulver "Amorphophallus Konjak Radix", 1,5 Gew.% Alginat und 95,5 Gew.% des Polymers gemäß Beispiel 1a mit einer Korngröße von 0,1 - 0,4 mm.

Beispiel 16

Absorptionsmittel aus 1,5 Gew.% käuflichem Pulver "Amorphophallus Konjak Radix", 1 Gew.% Guarkernmehl und 97,5 Gew.% des Polymers gemäß Beispiel 1a mit einer Korngröße von 0,1 - 0,4 mm.

Zur Charakterisierung der erfindungsgemäßen Absorptionsmittel wurden von den Beispielen der folgenden Tabelle 1 die freie Absorption (ATB) und die Zentrifugenretention (CRET) in Elektrolytlösung gemessen. Des weiteren wurden detaillierte Messungen der zeitabhängigen Absorption (Demand Absorbency, DA) in Blut und Elektrolytlösung, die Penetration von Blut, sowie rheologische Messungen der in Blut vorgequollenen Produkte durchgeführt.

Die freie Absorption und die Zentrifugenretention werden mit Hilfe der Teebeutelmethode bestimmt und als Mittelwert von zwei Messungen angegeben: Etwa 0.2 g Absorptionsmittel werden in einen Teebeutel eingeschweißt und für 20 Minuten in Elektrolytlösung getaucht. Zur Bestimmung der Absorption wird der Teebeutel nun diagonal für 10 Minuten aufgehängt und anschließend gewogen. Zur Bestimmung der Retention wird der Teebeutel nach dem Eintauchen (10 min anquellen) in einer Schleuder (23 cm Durchmesser, 1400 Upm) 3 Minuten geschleudert und gewogen. Mit Hilfe eines Teebeutels ohne Polymer wird der Blindwert bestimmt:

$$\text{Absorption/Retention} = \frac{\text{Auswaage - Blindwert}}{\text{Einwaage}}$$

Demand Absorbency: 0.1 g des Absorptionsmittels werden in einen Plexiglas-Zylinder (Innendurchmesser: 25 mm, Höhe: 33 mm, Boden: Drahtnetz mit Maschenweite 140 µm) eingewogen und 5 Minuten der Absorption ausgesetzt. Die Menge an absorbierter Flüssigkeit wird über die Gewichtsabnahme am Vorratsbehälter registriert.

Beim Penetrationstest erfolgt eine visuelle Beurteilung des Eindringvermögens von Schafsblut in die Prüfsubstanz. Der Wert 1 entspricht einer sehr guten, der Wert 6 einer sehr schlechten Penetration.

Der Elastizitätsmodul wird mit einem Controlled-Stress Rheometer der Firma Carri-Med mit einer Platte-Platte-Konfiguration gemessen. Zur Bestimmung des Elastizitätsmoduls läßt man 1 g Absorptionsmittel in 40 g Schafsblut für 12 Stunden quellen und mißt anschließend an diesem gequollenen Gel den Speichermodul in Abhängigkeit von der Schubspannung bei einer Frequenz von 1 Hz. Der Plateauwert wird als Elastizitätsmodul G' angegeben.

Die Ermittlung der Quellviskosität erfolgte an einem Rotationsviskosimeter (High Shear). Im Verlauf der Messung wird zu einem definierten Zeitpunkt Absorptionsmittel in gerührtes Schafsblut eingestreut und die Anquellzeit, sowie das Anquellvermögen zeitabhängig registriert.

Die Meßergebnisse sind in der folgenden Tabelle 1 zusammengefaßt. Darin bedeuten:

ATB - freie Absorption
CRET - Zentrifugenretention
DA - zeitabhängige Absorption
P - Penetration
G' - Elastizitätsmodul
Q - Quellviskosität
EL 1 - 0,9%ige Kochsalzlösung
EL 2 - Elektrolytlösung bestehend aus 0,9% NaCl,
$0,25\%$ $(NH_4)_2HPO_4$, $0,4\%$ $K_2SO_4$, $0,1\%$ $MgCl_2 \cdot 6H_2O$,
$0,08\%$ $CaCl_2 \cdot 2H_2O$.

Tabelle 1

| Beispiel | Schafsblut | | | DA [g/g] | DA [g/g] | EL 1 ATB [g/g] | CRET [g/g] | EL 2 ATB [g/g] |
|---|---|---|---|---|---|---|---|---|
| | P | G' [Pa] | Q 5'/10'/15' [mPas] | | | | | |
| 2 | 2-3 | 989 | 45/51/50 | 9,4 | 32 | 38 | 28 | 28 |
| 3 | 3-4 | 930 | 10/50/145 | 10 | 52,5 | 54 | 38 | 45 |
| 4 | 3 | 1035 | 43/55/48 | 9,5 | 38 | 50 | 36 | 35 |
| 5 | 2 | 100 | 20/20/20 | 8,8 | 15 | 20 | 15 | 18 |
| 6 | 3-4 | 940 | 36/123/150 | 10,2 | 53 | 54 | 38 | 45,5 |
| 7 | 4 | 835 | 81/178/125 | 10,7 | 53,5 | 54 | 37 | 46 |
| 8 | 2 | 855 | 64/88/93 | 10,2 | 41 | 47 | 33 | 40,5 |
| 9 | 2 | 1080 | 77/126/130 | 9 | 35 | 44 | 31 | 36 |
| 10 | 2 | 315 | 46/58/57 | 9 | 20 | 25 | 20 | 22 |
| 11 | 4 | 1060 | 79/170/125 | 10,2 | 52 | 53 | 37 | 45 |
| 12 | 2 | 825 | 58/90/93 | 10 | 43 | 45 | 31 | 40 |
| 13 | 3 | 860 | 42/55/48 | 9,7 | 38 | 51 | 37 | 35 |
| 14 | 4 | 1080 | 81/180/127 | 10,3 | 53 | 54 | 37 | 43 |
| 15 | 3 | 920 | 45/51/50 | 9,4 | 39 | 50 | 35 | 34 |
| 16 | 3 | 970 | 44/55/49 | 9,7 | 38 | 52 | 34 | 36 |
| Vergleich: Beispiel | | | | | | | | |
| 1a | 4-5 | 920 | 8/45/145 | 7,5 | 50 | 53 | 38 | 44 |
| Korngröße: 0,1-0,85 mm | | | | | | | | |

## Patentansprüche

1. Absorptionsmittel für Wasser und wäßrige Flüssigkeiten, dadurch gekennzeichnet, daß es ein Polysaccharid aus der Knolle einer Pflanze aus der Familie der Araceae und als weiteren saugfähigen Bestandteil ein oder mehrere hochsaugfähige, wasserquellbare synthetische Polymere enthält.

2. Absorptionsmittel gemäß Anspruch 1, dadurch gekennzeichnet, daß es ein Polysaccharid aus der Knolle einer Pflanze der Gattung Amorphophallus enthält.

3. Absorptionsmittel gemäß Anspruch 1 und/oder 2, dadurch gekennzeichnet, daß es Konjakmehl oder Konjakumannan enthält.

4. Absorptionsmittel gemäß einem oder mehreren der Ansprüche 1 bis 3, dadurch gekennzeichnet, daß der weitere saugfähige Bestandteil ein Polymer auf Basis (co)polymerisierter hydrophiler Monomerer ist.

5. Absorptionsmittel gemäß einem oder mehreren der Ansprüche 1 bis 4, dadurch gekennzeichnet, daß der weitere saugfähige Bestandteil ein Polymer auf Basis (co)polymerisierter Acrylsäure und/oder deren Salze und/oder Acrylsäureamid ist.

6. Absorptionsmittel gemäß einem oder mehreren der Ansprüche 1 bis 5, dadurch gekennzeichnet, daß der Anteil an Pflanzenprodukt 1 bis 20 Gew. % und der Anteil an weiterem saugfähigen Bestandteil 80 bis 99 Gew. % beträgt.

7. Absorptionsmittel gemäß einem oder mehreren der Ansprüche 1 bis 6, dadurch gekennzeichnet, daß es ein Bindemittel enthält.

8. Absorptionsmittel gemäß Anspruch 7, dadurch gekennzeichnet, daß es als Bindemittel Polyglycol enthält.

9. Verwendung eines Absorptionsmittels gemäß einem oder mehreren der Ansprüche 1 bis 8 zur Absorption von Blut.

**Claims**

1. Absorbent for water and aqueous fluids, characterised in that it contains a polysaccharide from the tuber of a plant from the family of the Araceae and, as further absorbent component, one or more highly-absorbent, water-swellable synthetic polymers.

2. Absorbent according to Claim 1, characterised in that it contains a polysaccharide from the tuber of a plant from the genus Amorphophallus.

3. Absorbent according to Claim 1 and/or 2, characterized in that it contains konjak flour or konjakumannan.

4. Absorbent according to one or more of Claims 1 to 3, characterised in that the further absorbent component is a polymer based on (co)polymerised hydrophilic monomers.

5. Absorbent according to one or more of Claims 1 to 4, characterised in that the further absorbent component is a polymer based on (co)polymerised acrylic acid and/or salts thereof and/or acrylamide.

6. Absorbent according to one or more of Claims 1 to 5, characterised in that the content of plant product is 1 to 20% by weight and the content of further absorbent component is 80 to 99% by weight.

7. Absorbent according to one or more of Claims 1 to 6, characterised in that it contains a binder.

8. Absorbent according to Claim 7, characterised in that it contains polyglycol as binder.

9. Use of an absorbent according to one or more of Claims 1 to 8 for absorbing blood.

**Revendications**

1. Absorbant de l'eau et des liquides aqueux, caractérisé en ce qu'il contient un polysaccharide provenant du tubercule d'une plante de la famille des aracées et, en tant qu'autre constituant absorbant, un ou plusieurs polymères synthétiques à grand pouvoir absorbant et pouvant gonfler à l'eau.

2. Absorbant selon la revendication 1, caractérisé en ce qu'il contient un polysaccharide obtenu à partir du tubercule d'une plante du genre Amorphophallus.

3. Absorbant selon la revendication 1 et/ou 2, caractérise en ce qu'il contient de la farine de Konjak ou du konjakumannane.

4. Absorbant selon l'une ou plusieurs des revendications 1 à 3, caractérisé en ce que l'autre constituant absorbant est un polymère à base de monomères hydrophiles (co)polymérisés.

5. Absorbant selon l'une ou plusieurs des revendications 1 à 4, caractérisé en ce que l'autre constituant absorbant est un polymère à base d'acide acrylique (co)polymérisé et/ou de ses sels et/ou d'acrylamide.

6. Absorbant selon l'une ou plusieurs des revendications 1 à 5, caractérisé en ce que la quantité du produit végétal est de 1 à 20 % en poids et la quantité de l'autre constituant absorbant est de 80 à 99 % en poids.

7. Absorbant selon l'une ou plusieurs des revendications 1 à 6, caractérisé en ce qu'il contient un liant.

8. Absorbant selon la revendication 7, caractérisé en ce qu'il contient du polyglycol en tant que liant.

9. Utilisation d'un absorbant selon l'une ou plusieurs des revendications 1 à 8, pour absorber le sang.